# EUROPEAN PATENT SPECIFICATION

(11) **EP 1 649 739 B1**
(45) Date of publication and mention of the grant of the patent: **16.04.2008**
(21) Application number: 05109672.5
(22) Date of filing: 18.10.2005
(51) Int. Cl.: A01D 43/08, F16H 7/12

(54) **Belt tensioning mechanism.**
Riemenspanneinrichtung
Tendeur de courroie

(30) Priority: 22.10.2004 GB 0423398
(43) Date of publication of application: 26.04.2006
(73) Proprietor: CNH Belgium N.V., 8210 Zedelgem (BE)
(72) Inventor: Van Vooren, Sandor W., 8340 Sijsele-Damme (BE); Depestel, Bernard E.D., 8730 Oedelem (BE)
(74) Representative: CNH IP Department

(56) References cited:
- CH-A- 405 854
- US-A- 1 835 617
- US-A- 4 048 787
- US-A- 4 205 508
- PATENT ABSTRACTS OF JAPAN vol. 1996, no. 11, 29 November 1996 (1996-11-29) & JP 08 191620 A (KIORITZ CORP), 30 July 1996 (1996-07-30)

## Description

### Field of the invention

The present invention relates to a belt tensioning mechanism for use in a forage harvester and comprising a cranking arm pivotable about a fixed axis between two positions and connected to move an idler roller into and out of contact with a belt to be tensioned.

### Background of the invention

A forage harvester can be used with different crops, some with and other without kernels. As kernels are difficult for animals to digest, it is known to provide a kernel cracking device, sometimes also known as a crop processor, which can selectively be placed within and withdrawn from the crop flow path, to suit the crop being harvested (see for example EP-A-1 358 788). The crop processor typically comprises a pair of belt driven serrated rollers between which the crop is crushed. Because of the belt drive, withdrawal of the crop processor from the crop flow path requires removal of the drive belt and hitherto relieving the belt tension and removing the belt have proved to be difficult tasks for which tools were needed. In JP 8 191 620 a belt tensioning system is disclosed that uses a linkage system to rotate idler rollers mounted on a pair of arms and a lever to hold the roller in various end positions, in and out of engagement with the belts. This system is dedicated for low power applications.

The problem is aggravated by the little space available in a forage harvester to accommodate the drive belt and drive pulleys of the crop processor. This places severe limitations one where a belt tensioning mechanism can be accommodated.

### Object of the invention

The present invention seeks therefore to provide a belt tensioning mechanism that is sufficiently compact to enable it to be used in a forage harvester, yet which allows the belt tension to be released and reset rapidly without the need for special tools, while solving the problem of the prior art cited above.

### Summary of the invention

According to the present invention, there is provided a belt tensioning mechanism comprising a cranking arm pivotable about a fixed axis between two positions and connected to move an idler roller into and out of contact with a belt to be tensioned, a plate rotatable with the cranking arm and a spring biased locking lever cooperating with the plate to lock the cranking arm in each of the said two positions, characterized in that said locking lever includes a projecting pin which engages in a respective one of two holes formed in the locking plate when the cranking arm is in each of the two positions.

Conveniently, the idler roller is connected to a rod that is slidably connected to the cranking arm and at least one spring is provided to act between the cranking arm and a stop on the rod. In this way, the idler roller can be moved between two positions rapidly by rotating the cranking arm and in each of the two positions the cranking arm is firmly and securely locked.

A locking lever is provided in the present invention because considerable force is required to release the locking pin because it is the pin, or other interlocking formation, which provides the reaction force needed to maintain the belt in tension.

Advantageously, the locking lever is pivotable about an axis that is coplanar with the axis of rotation of the cranking arm but extends transversely thereto. This makes for a particularly compact configuration.

The stop on the rod may suitably be constituted by a nut in screw threaded engagement with the rod, the position of the nut along the rod being thereby adjustable to set the force applied by the idler roller to the belt to maintain the belt in tension.

Because of the space limitations mentioned above, it may not be possible to make the cranking arm sufficiently long to enable the desired degree of belt tension to be applied by manually turning the cranking lever. It is therefore desirable to provide the cranking arm with a connector to enable an extension lever to be attached to the cranking arm. The connector may for example be a simple tube welded to the cranking arm to receive the end of a crow bar or other convenient implement.

### Brief description of the drawings

The invention will now be described further, by way of example, with reference to the accompanying drawings, in which:
Figure 1 is a side view of a belt tensioning mechanism of the invention with the belt tension released,
Figure 2 is a similar view to Figure 1 with the belt tension applied, and
Figure 3 is a perspective view from above of the lever mechanism for moving the rod connected to the idler roller.

### Detailed description of the preferred embodiment

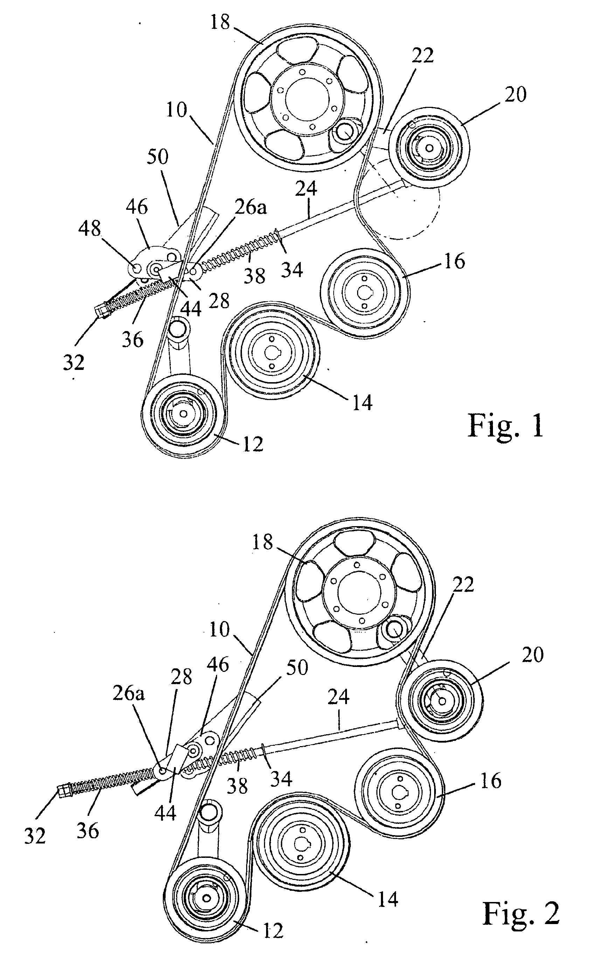

Figures 1 and 2 show a drive belt 10 for a crop processor of a forage harvester which passes around four pulleys 12, 14, 16 and 18. A fuller description of this belt drive is to be found in EP-A-1 358 788, referred to above, and a detailed explanation is not required in the present context as the invention can be applied to any belt drive in which it is desired to be able to release the belt tension and reset it rapidly without the use of special tools.

In the case of the illustrated belt drive, it suffices to know that the pulley 18 is driven by the blower of the forage harvester, pulley 12 is a first idler roller and pulleys 14 and 16 are drive pulleys mounted on the ends of the serrated rollers of the crop processor. Tension in the belt 10 is maintained by a second idler roller 20 that is mounted on the end of a short pivotable arm 22 and is pulled against the belt 10 by the belt tensioning mechanism of the invention.

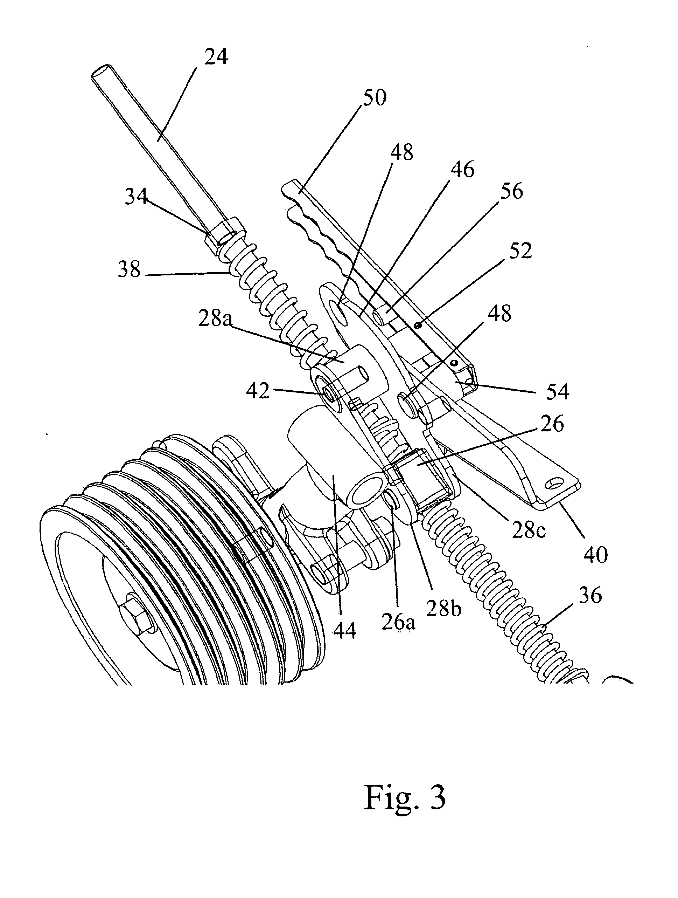

As shown in Figure 3, the belt tensioning mechanism includes a cranking arm 28 comprising a central hub 28a and two radially projecting cheeks 28b and 28c which carry between them a guide block 26 that can pivot relative to the cheeks 28b and 28c about pin 26a. A rod 24 that is connected to the arm 22 is slidably received in the guide block 26. Two nuts 32 and 34 that are threaded on to the rod 24 act as end stops for a strong spring 36 and a weaker spring 38 arranged on opposite sides of the guide block 26.

The cranking arm 28 is pivotably mounted on a stationary frame member 40 by means of a pin 42 passing through its hub 28a. The cheek 28b has welded to it a short length of tube 44 which can act as a connector for an extension lever, such as a crow bar. The opposite cheek 28c is formed integrally with a plate 46 having two holes 48. A locking lever 50 is pivotable relative to the frame member 40 about a pivot 52 of which the axis lies in the same plane as that of the pin 42 but at right angles to the latter axis. To one side of the pivot 52, the locking lever 50 is acted upon by a spring mechanism 54 and on the opposite side it carries a pin 56 which can engage in the two holes 48 to lock the cranking arm in one of two positions.

By inserting a lever into the connector 44, the cranking arm can be turned manually between the position shown in Figure 1 and that shown in Figure 2.

When the cranking arm 28 is turned counter-clockwise to engage the pin 56 in one of the holes 48 of the plate 46, the belt drive adopts the configuration shown in Figure 1. Here, the guide block 26 has moved to the right and the weak spring 38 acting on the stop 34 has moved the rod 24 to the right to disengage the idler roller 20 from the belt 10. In this position, the belt 10 can be lifted off the various pulleys to enable the crop processor to be removed. The weak spring 38 is required only to be able to apply the necessary force to pivot the idler roller 20 and the arm 22.

When the crop processor is re-introduced into the crop flow path, the belt 10 is rethreaded around the various pulleys. To tension the belt 10, the locking lever 50 is first pivoted about the pivot 52 to disengage the pin 56 from the hole 48 in the plate 46. With the pin 56 retracted from the hole 48, the plate 46 and the cranking arm 28 can be rotated clockwise into the position shown in Figure 2. An extension lever needs to be inserted in the connector 44 to allow sufficient torque to be applied to tension the belt 10.

When the cranking arm reaches the position shown in Figure 2, the spring mechanism 54 acting on the lever 50 pivots it to engage the pin 56 in the second hole 48, in order to lock the cranking arm 28 in its new position. In this position, the guide block 26 has been moved to the left, as viewed, by the rotation of the cranking arm 28 and the spring 36 transmits a force to the rod 24 via the stop 32 to move the idler roller 20 into the belt tensioning position. The belt tension is controlled by the compression of the spring 36, which can itself be adjusted my moving the nut 32 along the rod 24.

Once the position of the nut 32 has been set, the same degree of tension will be applied to the belt 10 whenever the cranking lever 28 is moved into the position shown in Figure 2.

It can thus be seen that the invention allows simple removal and replacement of the belt 10 without any special tools and ensures that the correct tension is applied to the belt after it has been replaced. The entire operation can be carried out by single person who can turn the cranking arm 28 with one hand while releasing the locking lever 50 with the other. The length of the lever 50 simplifies the task of releasing the locking pin 56 and this operation is also made easier if the force on the pin 56 is reduced by turning the cranking arm 28 with the aid of the extension lever.

## Claims

1. A belt tensioning mechanism comprising a cranking arm (28) pivotable about a fixed axis (42) between two positions and connected to move an idler roller (20) into and out of contact with a belt (10) to be tensioned, a plate (46) rotatable with the cranking arm (28) and a spring biased locking lever (50) cooperating with the plate (46) to lock the cranking arm (28) in each of the said two positions,
**characterized in that** said locking lever (50) includes a projecting pin (56) which engages in a respective one of two holes (48) formed in the locking plate (46) when the cranking arm (28) is in each of the said two positions.

2. A belt tensioning mechanism as claimed in claim 1, wherein the locking lever (50) is pivotable about an axis that is coplanar with the axis of rotation of the cranking arm (28) but extends transversely thereto.

3. A belt tensioning mechanism as claimed in claim 1 or 2, wherein the idler roller (20) is connected to a rod (24) that is slidably connected to the cranking arm (28) and wherein at least one spring (36,38) is provided to act between the cranking arm (28) and a stop (32,34) on the rod (24).

4. A belt tensioning mechanism as claimed in claim 3, wherein the stop on the rod is constituted by a nut (32,34) in screw threaded engagement with the rod (24), the position of the nut (32,34) along the rod being thereby adjustable to set the force applied by the idler roller (20) to the belt (10) to maintain the belt (10) in tension.

5. A belt tensioning mechanism as claimed in any preceding claim, wherein a connector (44) is provided for attaching an extension lever to the cranking arm (28).

## Patentansprüche

1. Riemen-Spannmechanismus mit einem Kurbelarm (28), der um eine feste Achse (42) zwischen zwei Positionen verschwenkbar und zum Bewegen einer Spannrolle (20) in und außer Kontakt mit einem Riemen (10) angeschlossen ist, wobei eine Platte (46) mit dem Kurbelarm (28) drehbar ist und ein durch eine Feder vorgespannter Verriegelungshebel (50) mit der Platte (46) zusammenwirkt, um den Verriegelungsarm (28) in jeder seiner zwei Positionen zu verriegeln;
**dadurch gekennzeichnet, dass** der Verriegelungshebel (50) einen vorspringenden Bolzen (56) einschließt, der in einer jeweiligen einen von zwei Bohrungen (48) zum Eingriff kommt, die in der Verriegelungsplatte (46) ausgebildet sind, wenn sich der Kurbelarm (28) in jeder seiner zwei Stellungen befindet.

2. Riemen-Spannmechanismus nach Anspruch 1, bei dem der Verriegelungshebel (50) um eine Achse verschwenkbar ist, die koplanar zu der Drehachse des Kurbelarms (28) verläuft, sich jedoch in Querrichtung hierzu erstreckt.

3. Riemen-Spannmechanismus nach Anspruch 1 oder 2, bei dem die Spannrolle (20) mit einer Stange (24) verbunden ist, die verschiebbar mit dem Kurbelarm (28) verbunden ist, wobei zumindest eine Feder (36, 38) vorgesehen ist, um zwischen dem Kurbelarm (28) und einem Anschlag (32, 34) auf der Stange (24) zu wirken.

4. Riemen-Spannmechanismus nach Anspruch 3, bei dem der Anschlag auf der Stange durch eine Mutter (32, 34) in Schraubeingriff mit der Stange (24) gebildet ist, wobei die Position der Mutter (32, 34) entlang der Stange einstellbar ist, um die von der Freilaufrolle (20) auf den Riemen (10) ausgeübte Kraft einzustellen, um den Riemen (10) unter Spannung zu halten.

5. Riemen-Spannmechanismus nach einem der vorhergehenden Ansprüche, bei dem ein Verbindungsstück (44) zur Anbringung eines Verlängerungshebels an dem Kurbelarm (28) vorgesehen ist.

## Revendications

1. Mécanisme de tension de courroie comprenant un bras de manivelle (28) pivotable entre deux positions autour d'un axe fixe (42) et relié pour amener une poulie folle (20) en contact avec une courroie à tendre (10) et l'éloigner de cette dernière, une plaque pivotable (46) avec le bras de manivelle (28) et un levier de verrouillage à ressort (50) coopérant avec la plaque (46) pour verrouiller le bras de manivelle (28) dans chacune desdites deux positions,
**caractérisé en ce que** ledit levier de verrouillage (50) comprend une goupille saillante (56) qui entre dans l'un des deux orifices (48) respectifs formés dans la plaque de verrouillage (46) lorsque le bras de manivelle (28) est dans chacune des deux positions.

2. Mécanisme de tension de courroie selon la revendication 1, **caractérisé en ce que** le levier de verrouillage (50) est pivotable autour d'un axe coplanaire à l'axe de rotation du bras de manivelle (28) mais qui s'étend transversalement par rapport à celui-ci.

3. Mécanisme de tension de courroie selon la revendication 1 ou 2, **caractérisé en ce que** la poulie folle (20) est reliée à une tige (24) elle-même reliée de manière coulissable au bras de levier (28), au moins un ressort (36, 38) étant fourni pour agir entre le bras de manivelle (28) et un arrêt (32, 34) sur la tige (24).

4. Mécanisme de tension de courroie selon la revendication 3, **caractérisé en ce que** l'arrêt sur la tige est constitué d'un écrou (32, 34) vissé sur la tige (24), la position de l'écrou (32, 34) sur la tige étant ainsi ajustable afin de régler la force appliquée par la poulie folle (20) à la courroie (10) pour maintenir la courroie en tension.

5. Mécanisme de tension de courroie suivant l'une quelconque des revendications précédentes, **caractérisé en ce qu'**un raccord (44) est fourni pour fixer une rallonge de levier au bras de manivelle (28).
